# EUROPÄISCHE PATENTSCHRIFT

(11) **EP 0 953 494 B1**
(45) Veröffentlichungstag und Bekanntmachung des Hinweises auf die Patenterteilung: **26.10.2005**
(21) Anmeldenummer: 99107920.3
(22) Anmeldetag: 22.04.1999
(51) Int. Cl.: B62D 15/02, G01D 5/12, G01D 5/26

(54) **Vorrichtung zur Bestimmung des Masses der Verdrehung zwischen zwei Teilen**
Apparatus for sensing the amount of torsion between two parts
Appareil pour détecter une valeur de torsion entre deux pièces

(30) Priorität: 02.05.1998 DE 19819664
(43) Veröffentlichungstag der Anmeldung: 03.11.1999
(73) Patentinhaber: Delphi Technologies Inc., Troy, MI 48007 (US)
(72) Erfinder: Rudolph, Gerd, 55459 Aspisheim (DE); Schnell, Klaus, 55435 Gau-Algesheim (DE); Leuschner, Markus, 55559 Bretzenheim (DE)
(74) Vertreter: Becker, Bernd

(56) Entgegenhaltungen:
- EP-A- 0 460 417
- EP-A- 0 774 648
- EP-A- 0 893 672
- EP-A- 0 911 610
- US-A- 5 734 160
- PATENT ABSTRACTS OF JAPAN vol. 010, no. 247 (P-490), 26. August 1986 (1986-08-26) & JP 61 076901 A (NISSAN MOTOR CO LTD), 19. April 1986 (1986-04-19)
- PATENT ABSTRACTS OF JAPAN vol. 1998, no. 06, 30. April 1998 (1998-04-30) -& JP 10 038557 A (ALPS ELECTRIC CO LTD), 13. Februar 1998 (1998-02-13)

## Beschreibung

Die Erfindung betrifft eine Vorrichtung zur Bestimmung des Maßes der Verdrehung zweier Apparateteile relativ zueinander um eine Hauptachse, mit einer ersten Erfassungseinrichtung, die einen Drehgeber enthält und eine die relative Winkelposition der beiden Teile im Bereich zwischen 0° und 360° anzeigende Feininformation liefert, und mit einer zweiten Erfassungseinrichtung, die eine Grobinformation zur Unterscheidung der Vollumdrehungen liefert, und die ein durch die relative Drehbewegung der beiden Apparateteile angetriebenes Getriebe und einen absoluten Lagesensor zur Bestimmung der Stellung eines vom Getriebe bewegten Meßkörpers enthält, wobei das Getriebe so dimensioniert ist, daß der maximal mögliche Verdrehbereich der beiden Apparateteile einem Bewegungsbereich des Meßkörpers entspricht, innerhalb dessen alle Positionen geometrisch voneinander unterscheidbar sind und der durch den Lagesensor mit einer Auflösung zumindest entsprechend den Vollumdrehungen zwischen den Apparateteilen auflösbar ist und das Getriebe eine in der Oberfläche einer am ersten Apparateteil befestigten Scheibe konzentrisch mit der Hauptachse verlaufende Spiralnut umfasst. Eine derartige Vorrichtung ist zum Beispiel aus der JP 10038557 A bekannt.

Derartige Vorrichtungen sind vielfältig bekannt und werden zur Istwerterfassung in Steuer- und Regelungssystemen verwendet, wobei der eine Apparateteil zumeist einen feststehenden "Stator" bildet, in welchem der zweite Apparateteil als "Rotor" drehbar gelagert ist. Der Rotor kann z.B. der Läufer eines Motors oder die Welle irgendeines Getriebes oder Meßgerätes sein, wobei der Stator durch den Ständer des Motors bzw. ein Gehäuse oder eine Halterung gebildet sein mag. Bevorzugtes, aber nicht ausschließliches Anwendungsgebiet der Erfindung ist die Bestimmung der Verdrehung des Lenkrades in einem Kraftfahrzeug. In diesem Falle ist der Rotor die Lenkradwelle, und der Stator ist die Lenkradhalterung.

Zur genauen Bestimmung eines Drehwinkels werden gewöhnlich Drehgeber mit analogen oder digitalen Winkelsensoren benutzt. Digitale Winkelsensoren bestehen im Prinzip aus einer mustertragenden Einrichtung und einer das Muster abtastenden Fühleinrichtung, die sich relativ zueinander drehen, entsprechend der Relativbewegung der beiden Apparateteile. Bei inkrementellen Sensoren ist die mustertragende Einrichtung eine Scheibe oder ein Rad mit gleichmäßig über den Umfang verteilten, gleichartigen Markierungen, die von der Fühleinrichtung gefühlt und durch Abgabe entsprechender Impulse signalisiert werden. Aufeinanderfolgende Impulse werden drehrichtungsabhängig gezählt, um aus der akkumulierten Summe den resultierenden Drehwinkel zu ermitteln. Um hieraus die Istposition zu bestimmen, bedarf es der Vorgabe einer Referenzposition, auf welche der Zählwert bezogen werden kann. Die Referenzposition wird üblicherweise durch eine gesonderte, von der Fühleinrichtung erfaßbare Referenz- oder Nullmarke kenntlich gemacht. Bei absoluten Sensoren hingegen ist das Muster ortsabhängig codiert, so daß für jede Winkelposition ein individuelles Fühlsignal erzeugt werden kann, welches die betreffende Position direkt eindeutig anzeigt.

Ist der Bereich der Relativdrehung größer als 360°, also mehr als eine Vollumdrehung, dann liefert die Anzeige einer Winkelposition keine eindeutige Information über das tatsächliche Maß einer Verdrehung. Gleiche Winkelpositionen innerhalb aufeinanderfolgender Vollumdrehungen sind geometrisch nicht voneinander unterscheidbar. Um in solchen Fällen eine eindeutige Anzeige zu erhalten, müssen also zusätzliche Maßnahmen zur Unterscheidung der Vollumdrehungen getroffen werden.

Eine hierzu bekannte Maßnahme ist ein drehrichtungsabhängiges Abzählen der Durchgänge durch eine Referenz- oder Nullwinkelposition, wie es z.B. im Zusammenhang mit einer Lenkrad-Sensorvorrichtung in den Druckschriften DE-C2-3700876 und DE-C1-19508607 beschrieben ist. Dies wirft besondere Probleme auf. Da die Gefahr besteht, daß der Zählwert beim Abschalten der elektrischen Versorgung verlorengeht oder durch Zählausfälle verfälscht wird, muß der verwendete Zähler regelmäßig initialisiert werden, um ihn für eine bestimmte Referenz-Lenkposition auf Null zu eichen.

In den bekannten Fällen wird als Referenzpunkt für die Initialisisierung derjenige Nulldurchgang gewählt, der beim Durchlaufen der Mitte des Verdrehbereichs des Lenkrades erfolgt und für die Geradeaus-Fahrtrichtung gilt. Gemäß der DE-C2-3700876 erfolgt die Identifizierung der Geradeausfahrt durch historische Auswertung: ein festgestellter Nulldurchgang wird dann als Mitte des Verdrehbereichs gewertet, wenn nicht innerhalb einer vorbestimmten Zeit nach dieser Feststellung ein weiterer Nulldurchgang festgestellt wird. Gemäß der DE-C1-19508607 erfolgt die Identifizierung der Geradeausfahrt durch einen gesonderten Sensor, der die Geradeauslaufstellung der gelenkten Laufräder des Fahrzeugs erkennt.

Die vorstehend genannten Lösungen sind kompliziert und störungsanfällig. Da nicht ganz auzuschließen ist, daß zwischen den Initialisierungen Zählfehler oder gar Zählwertverluste auftreten, bleibt ein gewisser Unsicherheitsfaktor.

Die EP 0 460 417 A1, JP 610 76 901 A, JP 100 38 557 A und US 5 734 160 A offenbaren jeweils eine Vorrichtung zur Bestimmung des Maßes der Verdrehung zweier Apparateteile relativ zueinander um eine Hauptachse, mit einer ersten Erfassungseinrichtung, die einen Drehgeber enthält und eine die relative Winkelposition der beiden Teile anzeigende Feininformation im Bereich zwischen 0° und 360°liefert, und mit einer zweiten Erfassungseinrichtung, die eine Grobinformation zur Unterscheidung der Vollumdrehungen liefert, und die ein durch die relative Drehbewegung der beiden Apparateteile angetriebenes Getriebe und einen absoluten Lagesensor zur Bestimmung der Stellung eines vom Getriebe bewegten Meßkörpers enthält, wobei das Getriebe so dimensioniert ist, daß der maximal mögliche Verdrehbereich der beiden Apparateteile einem Bewegungsbereich des Meßkörpers entspricht, innerhalb dessen alle Positionen geometrisch voneinander unterscheidbar sind und der durch den Lagesensor mit einer Auflösung zumindest entsprechend den Vollumdrehungen zwischen den Apparateteilen auflösbar ist.

Darüber hinaus zeigt die den nächstliegenden Stand der Technik bildende JP 100 38 557 A, dass das Getriebe eine in der Oberfläche einer am ersten Apparateteil befestigten Scheibe konzentrisch mit der Hauptachse verlaufende Spiralnut umfasst.

Die Aufgabe der Erfindung besteht darin, eine Vorrichtung der zur Bestimmung des Maßes der Verdrehung zwischen zwei Apparateteilen so auszubilden, daß sie weniger anfällig für Störungen ist, dabei das Maß der Verdrehung zwischen zwei Apparate-teilen auch über mehr als eine Vollumdrehung sicher anzeigt und bei einer kompakten Bauform eine geringe Anzahl von Einzelteilen aufweist.

Die gestellte Aufgabe wird erfindungsgemäß durch eine Vorrichtung mit den Merkmalen des Anspruchs 1 gelöst. Vorteilhafte Ausführungsformen der Erfindung sind in den Unteransprüchen gekennzeichnet.

Der Drehgeber der ersten Erfassungseinrichtung, welche die Winkelposition der beiden Apparateteile zueinander innerhalb einer Vollumdrehung anzeigt, kann mit einem inkrementellen oder mit irgendeinem analogen oder digitalen absoluten Winkelsensor arbeiten, der ein Fühlobjekt in Form einer am ersten Apparateteil befestigten Musterscheibe die am Rand einen Kranz mit einem fühlbaren Muster aufweist, und eine am zweiten Apparateteil befestigte Anordnung von Fühlelementen zur Erzeugung elektrischer Impulse beim Vorbeilauf des Musters umfasst. Sonach ist die Spiralnut auf einer Oberfläche der Musterscheibe gebildet. Konstruktive Vorteile bringt es, wenn der gemusterte Kranz am Rand der Musterscheibe axial absteht.

Das erfindungsgemäße Prinzip hat den Vorteil, daß es einer wiederholten Initialisierung der zweiten Erfassungseinrichtung nicht bedarf. Da die Bewegung des Meßkörpers auch bei mehr als einer Vollumdrehung der Apparateteile innerhalb eines Bereichs bleibt, dessen Orte direkt absolut unterscheidbar sind, im Gegensatz zu den Positionen einer über mehr als 360° gehenden Drehbewegung, kann ein absoluter Lagesensor am Meßkörper auch die einzelnen Vollumdrehungen direkt unterscheiden. Der Lagesensor kann relativ klein und einfach ausgebildet werden, da seine Auflösung nur der Anzahl der maximal möglichen Vollumdrehungen der Apparateteile zu entsprechen braucht.

In einer vorteilhaften Ausführungsform der Erfindung weist das Getriebe eine Spiralnut auf, die eine Anzahl von Windungen hat, die mindestens gleich der Anzahl möglicher Vollumdrehungen ist. In die Spiralnut greift gleitbar ein Stift, der am zweiten Apparateteil in einer Weise gelagert ist, die beim relativen Verdrehen der beiden Apparateteile eine Änderung der radialen Position des Stiftes bezüglich der Hauptachse bewirkt. Der Stift ist mechanisch mit dem Meßkörper verbunden.

Aus der WO-96/11514 ist ein ähnliches Spiral/Stift-Getriebe an sich bekannt. Auf einer ortsfesten, zur Drehachse eines Lenkrades konzentrischen Scheibe befindet sich eine Spiralnut, in der ein mit der Lenkradwelle umlaufender und radial verschieblicher Stift gleitet, dessen Position in ungefähre Deckung mit einer Markierung kommt, wenn das Lenkrad die Mitte seines Gesamtverdrehbereichs erreicht. Die Markierung befindet sich entweder direkt am Verschiebeweg des Stiftes oder am Ende eines Drehzeigers, auf den die Stiftbewegung über einen Hebelarm übertragen wird. Die Enden der Spiralnut bilden gleichzeitig die Endanschläge der Lenkradverdrehung. Dieser bekannte Mechanismus dient als Positionierhilfe beim Zusammenbau des Lenksystems.

Bei der erfindungsgemäßen Vorrichtung enthält der dort vorhandene absolute Lagesensor vorzugsweise eine am zweiten Apparateteil festgehaltene Anordnung von Fühlelementen und ein mit dem Meßkörper verbundenes Fühlobjekt, das sich beim Bewegen des Meßkörpers an der Anordnung der Fühlelemente entlangbewegt, um für jeden Positionsbereich, der jeweils einer bestimmten Vollumdrehung zwischen den Apparateteilen entspricht, eine individuelle Auswahl der Fühlelemente in gleichem Sinne zu beeinflussen, d.h. zu erregen bzw. abzuregen.

Die Fühlelemente können Lichtschranken sein, z.B. Gabel-Lichtschranken, bei denen das Fühlobjekt eine abschattende Blendenanordnung zur selektiven Aberregung der Lichtempfänger ist, oder Reflexlichtschranken, bei denen das Fühlobjekt eine reflektierende Anordnung zur selektiven Erregung der Lichtempfänger ist. Die Fühlelemente können aber auch durch eine CCD-Zeilenkamera oder durch spezielle optische ASICs gebildet sein. Statt der erwähnten optoelek-trischen Fühlelemente können auch induktiv, kapazitiv oder mit Ultraschall arbeitende Elemente verwendet werden.

Der Bewegungsbereich des Meßkörpers kann relativ kurz gehalten werden, da seine Lagebestimmung mit einer vergleichsweise geringen Auflösung erfolgen kann. Andererseits können manche Fühlelemente wie z.B. Lichtschranken oder induktive Fühler nicht beliebig klein ausgebildet werden. In einer vorteilhaften Ausführungsform der Erfindung wird erlaubt, daß, gemessen in Bewegungsrichtung des Fühlobjektes, sowohl der Erfassungsbereich der Fühlelemente-Anordnung als auch die Länge des Fühlobjektes wesentlich länger ist als der maximale Auslenkungsbereich des Fühlobjektes. Zur Ermöglichung der absoluten Lagebestimmung hat in diesem Fall das Fühlobjekt mehrere über seine Länge beabstandete Teilabschnitte, deren Teilung von derjenigen der Fühlelemente derart abweicht, daß für jeden Positionsbereich des Fühlobjektes, der einem bestimmten Vollumdrehungbereich zwischen den Apparateteilen entspricht, eine individuelle Auswahl der Fühlelemente in gleichem Sinne beeinflußt wird.

In einer alternativen Ausführungsform kann das Fühlobjekt in seiner Bewegungsrichtung ungeteilt sein und eine Länge haben, die so groß ist, daß sie über eine Anzahl von zwei oder mehr benachbarten Fühlelementen reichen kann, wobei diese Anzahl vorzugsweise um 1 kleiner ist als die Gesamtanzahl der Fühlelemente, die wiederum vorzugsweise um 2 kleiner ist als die Anzahl möglicher Vollumdrehungen zwischen den Apparateteilen. Dies vermindert die Gefahr von Mehrdeutigkeiten an den Grenzen zwischen jeweils zwei Vollumdrehungen

Der Lagesensor kann direkt am Verstellweg des in der Spiralnut gleitenden Stiftes angeordnet sein, um einen unmittelbar am Stift sitzenden Meßkörper zu beobachten. Eine alternative vorteilhafte Ausführungsform besteht jedoch darin, die Stiftbewegung auf eine Meßwelle zu übertragen, durch eine starre Befestigung des Stiftes am Ende eines Armes, der sei-nerseits starr mit der Meßwelle verbunden ist, die drehbar im zweiten Apparateteil gelagert ist und deren Achse parallel zur Hauptachse verläuft, wobei der Lagesensor zur Bestimmung der Drehstellung der Meßwelle ausgebildet ist. In diesem Fall ist das Fühlobjekt, z.B. eine Blendenanordnung im Falle der Verwendung von Gabel-Lichtschranken als Fühlelemente, vorzugsweise ein kreisbogenförmiges Element, das an der Meßwelle befestigt und konzentrisch zu deren Achse ist, wobei die Fühlelemente in entsprechender Kreisbogenform angeordnet sind.

Die Fühlelemente des Winkelsensors der ersten Erfassungseinrichtung und die Fühlelemente des Lagesensors der zweiten Erfassungseinrichtung sind vorzugsweise auf gegenüberliegenden Oberflächen einer gemeinsamen Trägerscheibe angeordnet, die am zweiten Apparateteil festgehalten ist.

Vorzugsweise ist der zweite Apparateteil ortsfest und der erste Apparateteil drehbar. Dies betrifft insbesondere die Anwendung der Erfindung zur Bestimmung der Lenkradverdrehung eines Kraftfahrzeuges; in diesem Falle ist der drehbare Apparateteil die Lenkradwelle eines Fahrzeuges, während der zweite Apparateteil die Halterung der Lenkradwelle ist.

Die Erfindung wird nachstehend anhand der beigefügten Zeichnungen näher erläutert, die Ausführungsformen zeigen, welche speziell als Lenkrad-Drehungsmeßvorrichtung ausgebildet sind. Diese Ausführungsformen haben jedoch nur Beispielcharakter und sind keinesfalls einschränkend gemeint.

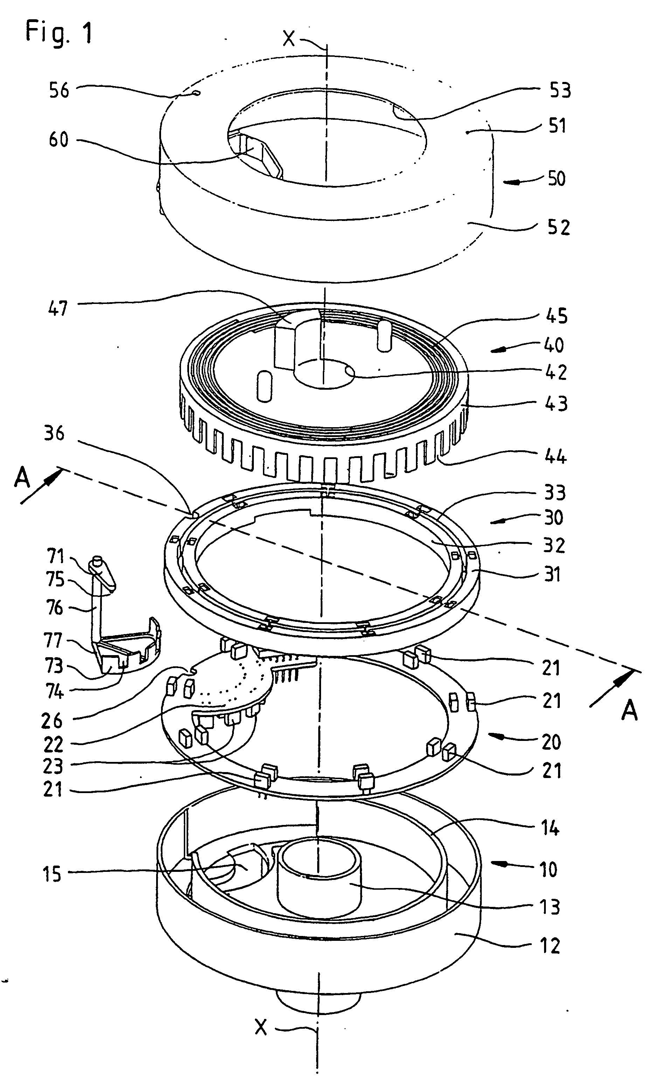

- Fig. 1: ist eine auseinandergezogene perspektivische Dar- stellung der wesentlichen Teile einer Ausführungs- form einer erfindungsgemäßen Drehungsmeßvorrichtung, in einer Ansicht schräg von oben;

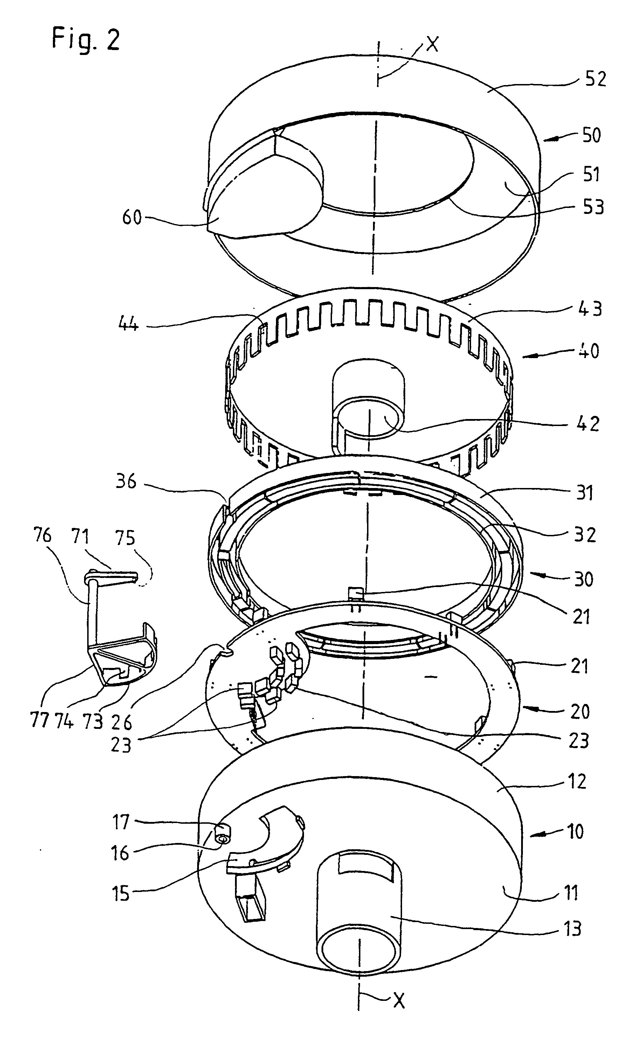

- Fig. 2: zeigt die in Fig. 1 dargestellten Teile in einer Ansicht schräg von unten; und

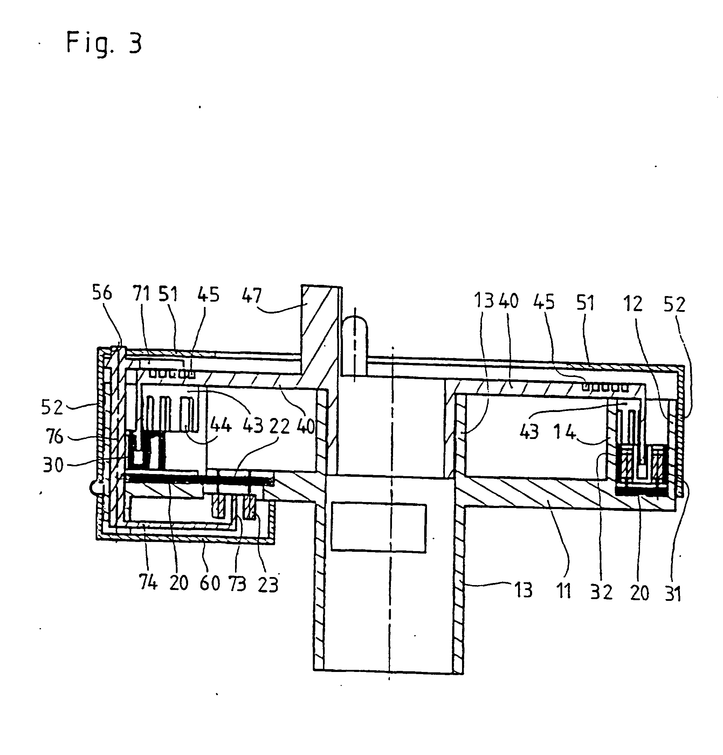

- Fig. 3: zeigt die zusammengesetzte Vorrichtung in einer Schnittansicht gemäß der Linie A-A der Fig. 1.

Die dargestellte Drehungsmeßvorrichtung ist so ausgebildet, daß sie an der Lenksäule eines Fahrzeuges angebracht werden kann, um das Maß der Verdrehung des Lenkrades zu bestimmen. Die Teile des Lenkrades und dessen Welle sowie die Halterung des Lenkrades sind aus Gründen der Übersichtlichkeit nicht dargestellt. Die strichpunktierte Linie X-X entspricht der Lenkradachse.

Die Vorrichtung hat einen unteren Gehäuseteil 10 mit einem kreisrunden Boden 11, von dessen äußerem Rand eine zylindrische Außenwand 12 nach oben steht. Durch die Mitte des Bodens 11 erstreckt sich eine angeformte zylindrische Hülse 13, die nach oben bis in die gleiche Höhe wie die Außenwand 12 reicht. Zwischen Hülse 13 und Außenwand 12 verläuft konzentrisch eine gleich hohe mittlere Wand 14, die ebenfalls dem Boden 11 angeformt ist und in Umfangsrichtung nicht ganz geschlossen ist, sondern zwei Enden hat. Zwischen den Enden der mittleren Wand 14 ist im Boden 11 eine Aussparung 15 in Form eines Kreisbogens gebildet. Der Kreisbogen verläuft konzentrisch zu einem nahe der Außenwand 12 liegenden Loch 16, das im Boden 11 gebildet ist und sich an der Unterseite des Bodens 11 in eine dort angeformte kleine Lagermuffe 17 fortsetzt.

Im ringförmigen Raum zwischen der Außenwand 12 und der mittleren Wand 14 des unteren Gehäuseteils 10 wird eine im wesentlichen ringförmige Trägerscheibe 20 gehäusefest aufgenommen, auf deren Oberseite mehrere in Umfangsrichtung verteilte erste Gabel-Lichtschranken 21 angeordnet sind. Die Trägerscheibe 20 hat an einem Ort, welcher der Position der kreisbogenförmigen Ausnehmung 15 im Boden 11 des unteren Gehäuseteils entspricht, eine kreissegmentförmige Verbreiterung 22 nach innen. Auf der Unterseite der Verbreiterung 22 sitzt eine Gruppe zweiter Gabel-Lichtschranken 23 in einer kreisbogenförmigen Anordnung, konzentrisch zu einer Kerbe 26, die am Außenrand der Trägerscheibe 20 gebildet ist. Die Lichtschranken 23 stehen im zusammengesetzten Zustand der Vorrichtung nach unten aus der Aussparung 15 des Gehäusebodens 11 heraus.

Auf der Trägerscheibe 20 ruht drehfest ein Schutzring 30, der im wesentlichen gleichen Außen- und Innendurchmesser wie die Trägerscheibe 20 hat. Der Schutzring 30 setzt sich zusammen aus zwei miteinander verbundenen konzentrischen Teilen 31 und 32, welche die Anordnung der Lichtschranken 21 außen und innen umringen. In der Oberseite Schutzringes 30 ist zwischen den Teilen 31 und 32 ein umlaufender Ringspalt 33 gebildet, der einen umlaufenden Zutritt in den Erfassungsbereich der Gabel-Lichtschranken 21 bietet.

Eine über dem Schutzring 30 gleichachsig angeordnete Scheibe 40 ist gegenüber dem Gehäuse und somit auch gegenüber dem Schutzring 30 und der Trägerscheibe 20 drehbar. Die Scheibe 40 hat eine Mittelöffnung 42 und ist am Außenrand mit einem zylindrischen Kranz 43 versehen, der nach unten absteht und ein Muster aus über den Umfang verteilten Schlitzen 44 aufweist. Dieser Kranz 43 greift von oben in den Ringspalt 33 des Schutzringes 30 und erstreckt sich in den Erfassungsbereich der Lichtschranken 21. Auf der Oberseite der Scheibe 40 ist eine Spiralnut 45 gebildet, die mehrere volle Windungen um den Mittelpunkt der Scheibe 40 beschreibt. Im dargestellten Fall sind es fünf Windungen.

In die Spiralnut 45 greift ein Gleitstift 75, der Bestandteil eines insgesamt mit 70 bezeichneten Getriebemechanismus ist. Der Mechanismus 70 wird weiter unten näher beschrieben.

Ein oberer Gehäuseteil 50 hat eine ringförmige Deckwand 51, von deren äußerem Rand eine zylindrische Seitenwand 52 nach unten steht. Die Deckwand 51 hat eine große Mittelöffnung 53. Die Seitenwand 52 wird von oben über die Seitenwand 12 des unteren Gehäuseteils 10 geschoben und dort durch geeignete Mittel in einer derartigen Höhe festgehalten, daß zwischen der Oberseite der Scheibe 40 und der Deckwand 51 ein gewisser Freiraum bleibt.

Als weiterer Gehäuseteil ist schließlich noch eine Kappe 60 vorgesehen, die den Bereich der kreisbogenförmigen Ausnehmung im Boden 11 des unteren Gehäuseteils 10 und somit die Anordnung der Lichtschranken 23 von unten abdeckt.

Es seien nun die Einzelheiten des bereits erwähnten Getriebemechanismus 70 beschrieben. Dieser Mechanismus weist einen Arm 71 auf, an dessen einem Ende der Gleitstift 75 befestigt ist. Das andere Ende des Armes 71 ist starr mit einer Meßwelle 76 verbunden, die sich parallel zur Hauptachse X-X erstreckt. Ein unterer Abschnitt der Meßwelle 76 ist drehbar im Loch 16 und in der Lagermuffe 17 am Boden 11 des unteren Gehäuseteils 10 gelagert. Das obere Ende der Meßwelle 76 ist drehbar in einem Loch 56 in der Deckwand 51 des oberen Gehäuseteils 50 gelagert. Die Kerbe 26 im Außenrand der Trägerscheibe 20 ist zum Eingriff mit der Meßwelle 76 ausgebildet. Dieser Eingriff bildet eine Drehsicherung für die Trägerscheibe 20 und garantiert, daß die kreisbogenförmige Anordnung der zweiten Lichtschranken 23 an der Unterseite der Trägerscheibe 20 konzentrisch zur Meßwelle ausgerichtet ist. Eine ähnliche Kerbe 36 im Schutzring 30 sorgt für eine Drehsicherung auch dieses Elementes. Im kreisbogenförmigen Erfassungsbereich der Lichtschrankenanordnung, also am Ort der Kreislinie zwischen den Sendern und Empfängern der Gabel-Lichtschranken 23, verläuft eine kreisbogenförmige Lichtschürze 73, die über speichenartige Streben 77 starr mit dem unteren, aus der Lagermuffe 17 herausstehenden Ende der Meßwelle 76 verbunden ist und mehrere beabstandete Schlitze 74 aufweist. Die Lichtschürze 73 bildet das "Fühlobjekt" der Lichtschrankenanordnung 23.

Für den Betrieb wird der untere Gehäuseteil 10 drehfest mit einem ersten Apparateteil verbunden, im hier betrachteten Fall mit der Halterung eines Lenkrades, indem die Hülse 13 z.B. auf der (nicht dargestellten) Lenksäulenmuffe verblockt wird. Mit dem unteren Gehäuseteil 10 werden auch der obere Gehäuseteil 50, der Ort der Meßwelle 76, die Trägerscheibe 20 und der Schutzring 30 festgehalten. Die mit dem gemusterten Kranz versehene Scheibe 40 bleibt jedoch drehbar. Ein zweiter Apparateteil, im hier betrachteten Fall das Lenkrad (nicht dargestellt), wird drehfest mit der Scheibe 40 verbunden, z.B. durch Verblockung mit einem Ansatz 47 der Scheibe 40, wobei die Lenkradwelle durch die Mittelöffnung 42 der Scheibe 40 greift.

Wird die Scheibe 40 gedreht, im hier betrachteten Fall durch Verdrehung des Lenkrades, dann wandert das Muster der Schlitze 44 als Fühlobjekt durch die Erfassungsbereiche der Gabel-Lichtschranken 21, die hierdurch auf- und abgeblendet werden, um elektrische Signale abhängig von der Drehbewegung zu liefern. Durch Auswertung der Signale kann auf die jeweils momentane Drehstellung geschlossen werden. Die Scheibe 40 und die Lichtschranken 21 bilden somit einen Drehgeber. Beim dargestellten Ausführungsbeispiel ist dieser Drehgeber als absoluter Winkelsensor ausgebildet. Hierzu weist das Muster der Schlitze 44 über den Umfang des Kranzes 43 eine sogenannte Kettencodierung auf, d.h. die Teilung der Schlitze ist nicht gleichförmig, sondern variiert über den Umfang entsprechend einem zyklisch permutierten Kettencode. Im dargestellten Fall seien es 9 Permutationszyklen über den Umfang, und entsprechend ist auch die Anzahl der über den Umfang der Trägerscheibe 20 verteilten Lichtschranken 21. Die Ausgangssignale der Lichtschranken 21 liefern nach entsprechender Decodierung eine absolute Anzeige der Winkelposition der Scheibe 40 im Bereich zwischen 0° und 360°.

Bei jeder Vollumdrehung der Scheibe 40 wiederholen sich die Lichtschranken-Signale in jeweils identischer Weise, so daß einzelne Vollumdrehungen anhand dieser Signale nicht voneinander unterscheidbar sind. Das zusätzliche Fühlsystem, welches durch die Spiralnut 45, den Mechanismus 70, und die Anordnung zweiter Lichtschranken 23 gebildet ist, ermöglicht eine solche Unterscheidung. Der Arm 71 und die Lichtschürze 73 sind relativ zueinander derart an der Meßwelle 76 angeordnet, daß die Lichtschürze 73 ihre Mittenstellung auf dem Kreisbogen der Lichtschrankenanordnung 23 einnimmt, wenn der am Ende des Armes 71 sitzende Gleitstift 75 am Ort der Mitte der Länge der Spiralnut 45 ist. Beim dargestellten Beispiel, in dem die Spiralnut 45 genau 5 volle Windungen umfaßt, ist dieser Ort die Mitte der dritten Windung. Beim Zusammenbau der Vorrichtung werden, bevor der Gleitstift 75 in die Spiralnut 45 gesetzt wird, die Drehposition der Meßwelle 70 und die Drehposition der Scheibe 40 in entsprechender Weise zueinander ausgerichtet.

Beim Drehen der Scheibe 40 wandert der in der Spiralnut 45 gleitende Stift 75 auf der Scheibe 40 nach innen oder außen, je nach Drehrichtung. Er beschreibt dabei eine mit der Meßwelle 76 konzentrische Kreisbahn und verdreht die Welle entsprechend. Natürlich muß dafür gesorgt sein, daß diese Kreisbahn alle Windungen der Spiralnut 45 überquert. Die Verdrehung der Meßwelle 76 führt zu einer entsprechenden Auslenkung der Lichtschürze 73 im Erfassungsbereich der Lichtschranken 23.

Die Anordnung der Lichtschranken 23 und die Anordnung der Schlitze 74 in der Lichtschürze 73 sind so gewählt, daß ein absoluter Lagesensor gebildet wird. Im einfachsten Fall kann es genügen, einen einzigen Schlitz 74 und eine Anzahl von Lichtschranken 23 vorzusehen, die gleich der Anzahl von Windungen der Spiralnut 45 ist. Die Lichtschranken 23 sind dann in einer Teilung anzuordnen, der dem Verstellweg der Lichtschürze 73 pro Vollumdrehung der Scheibe 40 entspricht, so daß für jede Vollumdrehung ein jeweils eindeutig zugeordnetes Exemplar der Lichtschranken 23 aufgeblendet wird. Dies kann jedoch konstruktive Probleme bringen, wenn der Verstellweg der Lichtschürze 73 relativ klein ist und entsprechend kleine Lichtschranken nicht zur Verfügung stehen oder zu teuer sind.

Um dieses Problem zu beseitigen, sind im dargestellten Fall mehrere Schlitze 74 in der Lichtschürze 73 vorgesehen, verteilt über eine Länge, die wesentlich größer ist als der Verstellweg der Lichtschürze 73. Dementsprechend größer ist auch die Länge der Lichtschrankenanordnung und somit der gegenseitige Abstand der Lichtschranken 23, die infolgedessen nicht sehr klein sein müssen. Durch bestimmte Bemessung der Teilung der Schlitze 44 in Relation zur Teilung der Lichtschranken 23 kann dafür gesorgt werden, daß bei verschiedenen Stellungen der Lichtschürze 73, die unterschiedlichen Vollumdrehungen der Scheibe 40 entsprechen, jeweils verschiedene Kombinationen der Lichtschranken 23 auf- bzw. abgeblendet sind. Infolge dieser "Codierung" liefern die Lichtschranken-signale eine eindeutige Unterscheidung einzelner Vollumdrehungen der Scheibe 40.

Eine Alternative, die für größere Verstellwege geeignet ist und mit relativ wenigen Lichtschranken 23 für den absoluten Lagesensor auskommt, besteht darin, die Lichtschürze 73 ohne Schlitze auszubilden und in ihrer Bewegungsrichtung so lang zu machen, daß sie jeweils zwei oder mehr benachbarte Lichtschranken 23 gleichzeitig verdunkeln kann. Sind z.B fünf Vollumdrehungen zu unterscheiden, dann kann man mit drei Lichtschranken A, B und C auskommen, wenn man die Länge der Lichtschürze so groß wählt, daß sie über jeweils zwei benachbarte Lichtschranken reichen kann. Für die fünf verschiedenen Vollumdrehungsbereiche lassen sich dann folgende unterscheidbare Situationen schaffen:

| Lichtschranke: | A | B | C |
|---|---|---|---|
| Umdrehung 1: | hell | hell | hell |
| Umdrehung 2: | dunkel | hell | hell |
| Umdrehung 3: | dunkel | dunkel | hell |
| Umdrehung 4: | hell | dunkel | dunkel |
| Umdrehung 5: | hell | hell | dunkel |

Sind sechs Vollumdrehungen zu unterscheiden, dann kann man mit vier Lichtschranken A, B, C und D auskommen, wenn man die Länge der Lichtschürze so groß wählt, daß sie über jeweils drei benachbarte Lichtschranken reichen kann. Für die sechs verschiedenen Vollumdrehungsbereiche lassen sich dann folgende unterscheidbare Situationen schaffen:

| Lichtschranke: | A | B | C | D |
|---|---|---|---|---|
| Umdrehung 1: | dunkel | hell | hell | hell |
| Umdrehung 2: | dunkel | dunkel | hell | hell |
| Umdrehung 3: | dunkel | dunkel | dunkel | hell |
| Umdrehung 4: | hell | dunkel | dunkel | dunkel |
| Umdrehung 5: | hell | hell | dunkel | dunkel |
| Umdrehung 6: | hell | hell | hell | dunkel |

Allgemein kann gelten: Die Anzahl n der Lichtschranken wird um 2 kleiner gewählt wird als die Anzahl möglicher Vollumdrehungen, und die Länge der Lichtschürze wird so gewählt, daß sie über n-1 Lichtschranken reichen kann.

Die Kombination des absoluten Lagesensors, der durch die Lichtschürze am Mechanismus 70 und die Lichtschranken 23 gebildet ist, mit dem Drehgeber, der durch den umlaufenden Kranz 43 und die Lichtschranken 21 gebildet ist, liefert eine Information über das Maß der Verdrehung des Lenkrades im Bereich von mehr als einer Vollumdrehung. Der Lagesensor 73, 23 identifiziert als Grobinformation die verschiedenen Vollumdrehungen, und der Drehgeber 43, 21 gibt als Feininformation die Winkelposition innerhalb jeder Vollumdrehung an. Nach einmaliger Ausrichtung der Drehstellung der Meßwelle 76 in bezug auf eine bestimmte Winkelstellung der Scheibe 40 während des Zusammenbaus der Vorrichtung ist nur noch ein einmaliger Abgleich beim Verblocken der Vorrichtung am Lenkapparat notwendig, um die Mitte des Gesamtverdrehbereichs des Lenkrades, also die Lenkposition für Geradeausfahrt, auf die Mitte des Verstellbereichs des Lagesensors zu legen.

In Verbindung mit dem Lenkapparat eines Kraftfahrzeuges ist die erfindungsgemäße Vorrichtung ein störungsfestes Mittel zur Lieferung einer zuverlässigen Information über den Lenkausschlag. Diese Information kann z.B. in Systemen zur Lenkhilfe, zur Navigationshilfe, zur Fahrzeugdynamikregelung und dergleichen verwendet werden.

Natürlich ist die Erfindung nicht auf die in den Figuren dargestellte Ausführungsform beschränkt, sondern läßt Raum für vielerlei Abwandlungen, von denen einige bereits angedeutet wurden. Der Drehgeber kann auch mit einem anderen als dem beschriebenen Codemuster versehen sein, es kann auch ein inkrementeller Winkelsensor ohne Codierung in Verbindung mit einem Zähler verwendet werden.

Was vorstehend für die Gabel-Lichtschranken und die Blendenanordnung beschrieben wurde, ist sinngemäß übertragbar auf andersartige Fühlelemente bzw. die dazu passenden Fühlobjekte, wie sie als Beispiele weiter oben erwähnt wurden. Der absolute Lagesensor kann aber auch ein analoger Sensor wie z.B ein Potentiometer sein. Hierbei kann der Meßkörper den Potentiometerschleifer bewegen; es ist aber auch möglich, den Meßkörper als bewegte Potentiometerbahn auszubilden. Im letzteren Fall kann die Potentiometerbahn als Widerstandsbelag in einer Spiralnut realisiert sein, die sich auf einer Scheibe ähnlich der Scheibe 40 befindet, während der Schleifer durch einen in die Nut greifenden Stift ähnlich dem Gleitstift 74 gebildet ist. Die elektrischen Zuleitungen des Potentiometers wären dann teilweise biegsam und wickelbar auszubilden, damit sie Spiel für mehrere Vollumdrehungen zwischen den Appararateilen geben.

Die Erfindung ist auch nicht auf die Verwendung an einem Kraftfahrzeug-Lenkapparat beschränkt, sondern kann mit Vorteil überall dort eingesetzt werden, wo die gegenseitige Verdrehung zweier beliebiger Teile über eine begrenzte Anzahl von Vollumdrehungen zuverlässig bestimmt werden soll.

## Patentansprüche

1. Vorrichtung zur Bestimmung des Maßes der Verdrehung zweier Apparateteile relativ zueinander um eine Hauptachse, mit
- einer ersten Erfassungseinrichtung, die einen Drehgeber enthält und eine die relative Winkelposition der beiden Teile im Bereich zwischen 0° und 360° anzeigende Feininformation liefert, und
- einer zweiten Erfassungseinrichtung, die eine Grobinformation zur Unterscheidung der Vollumdrehungen liefert, und die ein durch die relative Drehbewegung der beiden Apparateteile angetriebenes Getriebe (40, 45, 75, 71) und einen absoluten Lagesensor (23, 73) zur Bestimmung der Stellung eines vom Getriebe (40, 45, 75, 71) bewegten Meßkörpers (76) enthält, wobei das Getriebe (40, 45, 75, 71) so dimensioniert ist, daß der maximal mögliche Verdrehbereich der beiden Apparateteile einem Bewegungsbereich des Meßkörpers (76) entspricht, innerhalb dessen alle Positionen geometrisch voneinander unterscheidbar sind und der durch den Lagesensor (23, 73) mit einer Auflösung zumindest entsprechend den Vollumdrehungen zwischen den Apparateteilen auflösbar ist und das Getriebe (40, 45, 75, 71) eine in der Oberfläche einer am ersten Apparateteil befestigten Scheibe (40) konzentrisch mit der Hauptachse (X-X) verlaufende Spiralnut (45) umfasst,
**dadurch gekennzeichnet, dass**
der Drehgeber der ersten Erfassungseinrichtung einen Winkelsensor aufweist, enthaltend ein Fühlobjekt in Form einer am ersten Apparateteil befestigten Musterscheibe (40), die am Rand einen axial abstehenden Kranz (43) mit einem fühlbaren Muster (44) aufweist, und eine am zweiten Apparateteil befestigte Fühlelemente-Anordnung (21) zur Erzeugung elektrischer Impulse beim Vorbeilauf des Musters (44), wobei die Spiralnut (45) auf einer Oberfläche der Musterscheibe (40) gebildet ist.

2. Vorrichtung nach Anspruch 1, **dadurch gekennzeichnet, daß** das Getriebe (40, 45, 75, 71) gebildet ist durch:
- die Spiralnut (45) eine Anzahl von Windungen hat, die mindestens gleich der Anzahl möglicher Vollumdrehungen ist;
- einen in die Spiralnut (45) gleitbar greifenden Stift (75), der am zweiten Apparateteil in einer Weise gelagert ist, die beim Verdrehen der beiden Apparateteile eine Änderung der radialen Position des Stiftes (75) bezüglich der Hauptachse (X-X) bewirkt; und
- eine mechanische Verbindung (71) des Stiftes (75) mit dem Meßkörper (76).

3. Vorrichtung nach Anspruch 1 oder 2, **dadurch gekennzeichnet, daß** der Lagesensor (23, 73) eine am zweiten Apparateteil festgehaltene Anordnung diskreter Fühlelemente (23) und ein mit dem Meßkörper verbundenes Fühlobjekt (73) enthält, das sich beim Bewegen des Meßkörpers (76) an der Anordnung der Fühlelemente (23) entlangbewegt, um für jeden Positionsbereich, der jeweils einer bestimmten Vollumdrehung zwischen den Apparateteilen entspricht, eine individuelle Auswahl der Fühlelemente (23) in gleichem Sinne zu beeinflussen.

4. Vorrichtung nach Anspruch 3, **dadurch gekennzeichnet, daß**
- in Bewegungsrichtung des Fühlobjektes (73) sowohl der Erfassungsbereich der Fühlemente-Anordnung (23) als auch die Länge des Fühlobjektes (73) wesentlich länger ist als der maximale Auslenkungsbereich des Fühlobjektes (73), und
- das Fühlobjekt (73) mehrere über seine Länge beabstandete Teilabschnitte aufweist, deren Teilung von derjenigen der Fühlelemente (23) derart abweicht, daß für jeden Positionsbereich der Fühlobjektes (73), der einem bestimmten Voll-umdrehungbereich zwischen den Apparateteilen entspricht, eine individuelle Auswahl der Fühlelemente (23) in gleichem Sinne beeinflußt wird.

5. Vorrichtung nach Anspruch 3, **dadurch gekennzeichnet, daß** das Fühlobjekt in seiner Bewegungsrichtung ungeteilt ist und eine Länge hat, die über den Erfassungsbereich einer Mehrzahl m benachbarter Fühlelemente reichen kann, wobei m kleiner ist als die Gesamtanzahl n der Fühlelemente.

6. Vorrichtung nach Anspruch 5, **dadurch gekennzeichnet, daß** die Gesamtanzahl n der Fühlelemente kleiner ist als die Anzahl p möglicher Vollumdrehungen zwischen den Apparateteilen.

7. Vorrichtung nach Anspruch 6, **dadurch gekennzeichnet, daß** n=p-2 und m=n-1 ist.

8. Vorrichtung nach Anspruch 2, **dadurch gekennzeichnet, daß**
- der Stift (75) am Ende eines Armes (71) starr befes tigt
ist, der seinerseits starr mit einer Meßwelle (76) verbunden ist, die drehbar im zweiten Apparateteil gelagert ist und deren Achse parallel zur Hauptachse (X-X) verläuft, und
der Lagesensor (23, 73) zur Bestimmung der Drehstel lung der Meßwelle (76) ausgebildet ist.

9. Vorrichtung nach einem der Ansprüche 3 bis 7 und nach An spruch 8, **dadurch gekennzeichnet, daß**
- das Fühlobjekt (73) ein kreisbogenförmiges Element ist, das an der Meßwelle (76) befestigt und konzentrisch zu deren Achse ist, und
- die Fühlelemente (23) in entsprechender Kreisbogenform angeordnet sind.

10. Vorrichtung nach einem der Ansprüche 3 bis 9 und nach einem der Ansprüche 10 bis 12, **dadurch gekennzeichnet, daß** die Fühlelemente (21) des Winkelsen-sors (21, 43) der ersten Erfassungseinrich-tung und die Fühlemente (23) des Lagesensors (23, 73) der zweiten Er-fassungseinrichtung auf gegenüberliegenden Oberflächen einer gemeinsamen Trägerscheibe (20) angeordnet sind, die am zweiten Apparateteil festgehalten ist.

11. Vorrichtung nach einem der Ansprüche 3 bis 10, **dadurch gekennzeichnet, daß** die Fühlelemente (23) zumindest des Lagesensors (23, 73) der zweiten Erfassungseinrichtung optoelektrische Fühler sind.

12. Vorrichtung nach Anspruch 11, **dadurch gekennzeichnet, daß** die Fühlelemente Gabel-Lichtschranken (23) sind, die vom Fühlobjekt (73) durch Lichtdurchlaß und Lichtabschattung erregt bzw. abgeregt werden.

13. Vorrichtung nach Anspruch 11, **dadurch gekennzeichnet, daß** die Fühlelemente Reflexlichtschranken sind, die vom Fühlobjekt durch seine Lichtreflexion beeinflußt werden.

14. Vorrichtung nach Anspruch 11, **dadurch gekennzeichnet, daß** die Anordnung der Fühlelemente des Lagesensors der zweiten Erfassungseinrichtung eine CCD-Zeilenkamera ist.

15. Vorrichtung nach Anspruch 11, **dadurch gekennzeichnet, daß** die Fühlelemente optische ASICs sind.

16. Vorrichtung nach einem der Ansprüche 3 bis 10, **dadurch gekennzeichnet, daß** die Fühlelemente zumindest des Lagesensors der zweiten Erfassungseinrichtung induktive Fühler sind, die durch das Fühlobjekt induktiv beeinflußt werden.

17. Vorrichtung nach einem der Ansprüche 3 bis 10, **dadurch gekennzeichnet, daß** die Fühlelemente zumindest des Lagesensors der zweiten Erfassungseinrichtung kapazitive Fühler sind, die durch das Fühlobjekt kapazitiv beeinflußt werden.

18. Vorrichtung nach einem der Ansprüche 3 bis 10, **dadurch gekennzeichnet, daß** die Fühlelemente zumindest des Lagesensors der zweiten Erfassungseinrichtung Ultraschall-Fühler sind, die vom Fühlobjekt durch dessen Schallreflexions- bzw. Schallabschirmungs-Vermögen beeinflußt werden.

19. Vorrichtung nach Anspruch 1, **dadurch gekennzeichnet, daß** der Lagesensor der zweiten Erfassungseinrichtung ein Potentiometer ist.

20. Vorrichtung nach Anspruch 19, **dadurch gekennzeichnet, daß**
- der Meßkörper die Schleifbahn des Potentiometers in Form eines Widerstandsbelages in einer Spiralnut ist, welche in der Oberfläche einer am ersten Apparateteil befestigten Scheibe konzentrisch mit der Hauptachse verläuft und eine Anzahl von Windungen hat, die mindestens gleich der Anzahl möglicher Vollumdrehungen ist, und
- der Schleifer des Potentiometers am zweiten Apparate teil so gehalten ist, daß er in der Spiralnut gleitet, wenn die Apparateteile zueinander verdreht werden.

21. Vorrichtung nach einem der vorhergehenden Ansprüche, **dadurch gekennzeichnet, daß** der zweite Apparateteil ortsfest und der erste Apparateteil gegenüber dem zweiten Apparateteil drehbar ist.

22. Vorrichtung nach Anspruch 19, **dadurch gekennzeichnet, daß** der drehbare Apparateteil die Lenkradwelle eines Fahrzeuges ist und daß der zweite Apparateteil die Halterung der Lenkradwelle ist.

## Claims

1. Device for determining the extent of twisting of two apparatus parts relative to one another about a main axis, having
- a first detecting device which contains a rotation transmitter and supplies fine-detail information indicating the relative angular position of the two parts in the range between 0° and 360°, and
- a second detecting device which supplies coarse information for distinguishing complete revolutions and which contains a gear (40, 45, 75, 71) driven by the relative rotary motion of the two apparatus parts and an absolute position sensor (23, 73) for determining the position of a measuring element (76) moved by the gear (40, 45, 75, 71), wherein the gear (40, 45, 75, 71) is dimensioned so that the maximum possible twisting range of the two apparatus parts corresponds to a range of movement of the measuring element (76) within which all positions are geometrically distinguishable from one another and which is resolvable by the position sensor (23, 73) with a resolution at least corresponding to the complete revolutions between the apparatus parts and the gear (40, 45, 75, 71) comprises a spiral groove (45) running concentrically with the main axis (X-X) in the surface of a disk (40) fastened to the first apparatus part,
**characterised in that**
the rotation transmitter of the first detecting device possesses an angle sensor containing a feeler object in the form of a pattern disk (40) fastened to the first apparatus part which at the perimeter has an axially projecting collar (43) having a tangible pattern (44) and a feeler-element arrangement (21) fastened to the second apparatus part for generating electric pulses when the pattern (44) runs past, wherein the spiral groove (45) is formed on a surface of the pattern disk (40).

2. Device according to claim 1, **characterised in that** the gear (40, 45, 75, 71) is formed by:
- the spiral groove (45) having a number of windings which is at least equal to the number of possible complete revolutions;
- a pin (75) engaging in sliding manner in the spiral groove (45) which pin is mounted on the second apparatus part in a fashion which when the two apparatus parts twist brings about a change in the radial position of the pin (75) with respect to the main axis (X-X); and
- a mechanical connection (71) of the pin (75) to the measuring element (76).

3. Device according to claim 1 or 2, **characterised in that** the position sensor (23, 73) contains an arrangement of discrete feeler elements (23) fixed on the second apparatus part and a feeler object (73) which is connected to the measuring element and on movement of the measuring element (76) moves along the arrangement of feeler elements (23) in order, for each positional range each corresponding to a certain complete revolution between the apparatus parts, to influence an individual selection of the feeler elements (23) in the same direction.

4. Device according to claim 3, **characterised in that**
- in the direction of motion of the feeler object (73) both the detection range of the feeler-element arrangement (23) and the length of the feeler object (73) is substantially longer than the maximum excursion range of the feeler object (73), and
- the feeler object (73) possesses a plurality of subsections spaced over its length whose partitioning differs from that of the feeler elements (23) in such a way that for each positional range of the feeler object (73) corresponding to a certain complete revolution range between the apparatus parts an individual selection of the feeler elements in the same direction is affected.

5. Device according to claim 3, **characterised in that** the feeler object is unpartitioned in its direction of motion and has a length which can extend over the detection range of a plurality m of neighbouring feeler elements, wherein m is less than the total number n of feeler elements.

6. Device according to claim 5, **characterised in that** the total number n of feeler elements is less than the number p of possible complete revolutions between the apparatus parts.

7. Device according to claim 6, **characterised in that** n = p - 2 and m = n - 1.

8. Device according to claim 2, **characterised in that**
- the pin (75) is rigidly fastened to the end of an arm (71) which for its part is rigidly connected to a measuring shaft (76) which is rotatably mounted in the second apparatus part and whose axis runs parallel to the main axis (X-X) and
the position sensor (23, 73) is constructed for determining the rotary position of the measuring shaft (76).

9. Device according to one of claims 3 to 7 and according to claim 8, **characterised in that**
- the feeler object (73) is an element in the shape of an arc of a circle which is fastened to the measuring shaft (76) and is concentric with the axis of the latter, and
- the feeler elements (23) are arranged in corresponding circular arc shape.

10. Device according to one of claims 3 to 9 and according to one of claims 10 to 12, **characterised in that** the feeler elements (21) of the angle sensor (21, 43) of the first detecting device and the feeler elements (23) of the position sensor (23, 73) of the second detecting device are arranged on opposite surfaces of a common support disk (20) which is fixed to the second apparatus part.

11. Device according to one of claims 3 to 10, **characterised in that** the feeler elements (23) at least of the position sensor (23, 73) of the second detecting device are optoelectric sensing devices.

12. Device according to claim 11, **characterised in that** the feeler elements are forked light barriers (23) which are excited and de-excited by the feeler object (73) due to light transmission and light blockage.

13. Device according claim 11, **characterised in that** the feeler elements are reflected light barriers which are affected by the feeler object due to the light reflection thereof.

14. Device according to claim 11, **characterised in that** the arrangement of the feeler elements of the position sensor of the second detecting device is a CCD line camera.

15. Device according to claim 11, **characterised in that** the feeler elements are optical ASICs.

16. Device according to one of claims 3 to 10, **characterised in that** the feeler elements at least of the position sensor of the second detecting device are inductive sensing devices which are affected inductively by the feeler object.

17. Device according to one of claims 3 to 10, **characterised in that** the feeler elements at least of the position sensor of the second detecting device are capacitive sensing devices which are affected capacitively by the feeler object.

18. Device according to one of claims 3 to 10, **characterised in that** the feeler elements at least of the position sensor of the second detecting device are ultrasonic sensing devices which are affected by the feeler object due to the sound-reflection or sound-screening capacity thereof.

19. Device according to claim 1, **characterised in that** the position sensor of the second detecting device is a potentiometer.

20. Device according to claim 19, **characterised in that**
- the measuring element is the slide path of the potentiometer in the form of a resistance load per unit length in a spiral groove which runs concentrically with the main axis in the surface of a disk fastened to the first apparatus part and has a number of windings which is at least equal to the number of possible complete revolutions, and
- the slide of the potentiometer is held on the second apparatus part in such a way that it slides in the spiral groove when the apparatus parts are twisted relative to one another.

21. Device according to one of the preceding claims, **characterised in that** the second apparatus part is fixed and the first apparatus part is rotatable with respect to the first apparatus part.

22. Device according to claim 19, **characterised in that** the rotatable apparatus part is the steering wheel shaft of a vehicle and that the second apparatus part is the mounting of the steering wheel shaft.

## Revendications

1. Dispositif pour déterminer la mesure de la rotation de deux pièces d'appareil l'une par rapport à l'autre autour d'un axe principal, avec
- un premier dispositif de détection qui contient un mesureur de rotation et fournit une information précise indiquant la position angulaire relative des deux pièces dans une plage comprise entre 0° et 360°, et
- un deuxième dispositif de détection qui fournit une information approximative pour différencier les tours complets et qui contient un mécanisme (40, 45, 75, 71), entraîné par le mouvement de rotation relatif des deux pièces d'appareil, et un capteur de position absolue (23, 73) pour déterminer la position d'un corps de mesure (76) déplacé par le mécanisme (40, 45, 75, 71), le mécanisme (40, 45, 75, 71) étant dimensionné de façon que la plage de rotation maximale possible des deux pièces d'appareil corresponde à une plage de déplacement du corps de mesure (76), à l'intérieur de laquelle toutes les positions sont différentiables géométriquement les unes des autres et qui est restituable par le capteur de position (23, 73) avec une résolution correspondant au moins aux tours complets entre les pièces d'appareil, et le mécanisme (40, 45, 75, 71) comprenant une rainure en spirale (45) s'étendant de manière concentrique à l'axe principal (X-X) dans la surface d'un disque (40) fixé à la première pièce d'appareil,
**caractérisé en ce que** le mesureur de rotation du premier dispositif de détection comporte un capteur angulaire contenant un objet palpeur en forme de disque modèle (40) qui est fixé à la première pièce d'appareil et qui comporte, sur le bord, une couronne en saillie axiale (43) avec un modèle palpable (44), et un agencement d'éléments palpeurs (21) fixés à la seconde pièce d'appareil pour produire des impulsions électriques au passage du modèle (44), la rainure en spirale (45) étant formée sur une surface du disque modèle (40).

2. Dispositif selon la revendication 1, **caractérisé en ce que** le mécanisme (40, 45, 75, 71) est formé par :
- la rainure en spirale (45), laquelle comporte un nombre de spires qui est au moins égal au nombre de tours complets possibles ;
- une broche (75) qui pénètre à glissement dans la rainure en spirale (45) et est montée sur la seconde pièce d'appareil de façon à provoquer une modification de la position radiale de la broche (75) par rapport à l'axe principal (X-X) lors de la rotation des deux pièces d'appareil ; et
- une liaison mécanique (71) de la broche (75) avec le corps de mesure (76).

3. Dispositif selon la revendication 1 ou 2, **caractérisé en ce que** le capteur de position (23, 73) contient un agencement, fixé à la seconde pièce d'appareil, d'éléments palpeurs discrets (23) et un objet palpeur (73) qui est relié au corps de mesure et qui, lors du déplacement du corps de mesure (76) se déplace le long de l'ensemble d'éléments palpeurs (23) afin d'agir dans le même sens sur une sélection individuelle d'éléments palpeurs (23) pour chaque plage de positions qui correspond à chaque fois à un tour complet déterminé entre les pièces d'appareil.

4. Dispositif selon la revendication 3, **caractérisé en ce que**
- dans la direction de déplacement de l'objet palpeur (73), aussi bien la plage de détection de l'agencement d'éléments palpeurs (23) que la longueur de l'objet palpeur (73) sont nettement plus longues que la plage de déviation maximale de l'objet palpeur (73), et
- l'objet palpeur (73) comporte plusieurs portions partielles qui sont espacées sur sa longueur et dont l'écartement diffère de celui des éléments palpeurs (23), de façon à agir dans le même sens sur une sélection individuelle d'éléments palpeurs (23) pour chaque plage de positions de l'objet palpeur (73) correspondant à une plage de tour complet déterminée entre les pièces d'appareil.

5. Dispositif selon la revendication 3, **caractérisé en ce que** l'objet palpeur est non divisé dans sa direction de déplacement et a une longueur qui lui permet de couvrir la plage de détection d'une pluralité m d'éléments palpeurs voisins, m étant inférieur au nombre total n d'éléments palpeurs.

6. Dispositif selon la revendication 5, **caractérisé en ce que** le nombre total n d'éléments palpeurs est inférieur au nombre p de tours complets possibles entre les pièces d'appareil.

7. Dispositif selon la revendication 6, **caractérisé en ce que** n=p-2 et m=n-1..

8. Dispositif selon la revendication 2, **caractérisé en ce que**
- la broche (75) est fixée de manière rigide à l'extrémité d'un bras (71) qui, pour sa part, est relié de manière rigide à un arbre de mesure (76) qui est monté à pivotement dans la seconde pièce d'appareil et dont l'axe est parallèle à l'axe principal (X-X), et
- le capteur de position (23, 73) est conformé pour déterminer la position de rotation de l'arbre de mesure (76).

9. Dispositif selon une des revendications 3 à 7, **caractérisé en ce que**
- l'objet palpeur (73) est un élément en arc de cercle qui est fixé à l'arbre de mesure (76) et est concentrique à l'axe de celui-ci, et
- les éléments palpeurs (23) sont disposés selon une forme d'arc de cercle correspondante.

10. Dispositif selon une des revendications 3 à 9 et selon une des revendications 10 à 12, **caractérisé en ce que** les éléments palpeurs (21) du capteur angulaire (21, 43) du premier dispositif de détection et les éléments palpeurs (23) du capteur de position (23, 73) du second dispositif de détection sont disposés sur des surfaces opposées d'un disque porteur commun (20) qui est fixé à la seconde pièce d'appareil.

11. Dispositif selon une des revendications 3 à 10, **caractérisé en ce que** les éléments palpeurs (23) au moins du capteur de position (23, 73) du second dispositif de détection sont des palpeurs optoélectroniques.

12. Dispositif selon la revendication 11, **caractérisé en ce que** les éléments palpeurs sont des barrières lumineuses fourchues (23) qui sont excitées, respectivement désexcitées par l'objet palpeur (73) par passage de la lumière et occultation de la lumière.

13. Dispositif selon la revendication 11, **caractérisé en ce que** les éléments palpeurs sont des barrières lumineuses à réflexion sur lesquelles l'objet palpeur agit par l'intermédiaire de sa réflexion lumineuse.

14. Dispositif selon la revendication 11, **caractérisé en ce que** l'agencement des éléments palpeurs du capteur de position du second dispositif de détection est une caméra CCD linéaire.

15. Dispositif selon la revendication 11, **caractérisé en ce que** les éléments palpeurs sont des circuits intégrés optiques spécifiques.

16. Dispositif selon une des revendications 3 à 10, **caractérisé en ce que** les éléments palpeurs au moins du capteur de position du second dispositif de détection sont des palpeurs inductifs sur lesquels l'objet palpeur agit de manière inductive.

17. Dispositif selon une des revendications 3 à 10, **caractérisé en ce que** les éléments palpeurs au moins du capteur de position du second dispositif de détection sont des palpeurs capacitifs sur lesquels l'objet palpeur agit de manière capacitive.

18. Dispositif selon une des revendications 3 à 10, **caractérisé en ce que** les éléments palpeurs au moins du capteur de position du second dispositif de détection sont des palpeurs à ultrasons sur lesquels l'objet palpeur agit par l'intermédiaire de son pouvoir de réflexion sonore, respectivement pouvoir d'isolation sonore.

19. Dispositif selon la revendication 1, **caractérisé en ce que** le capteur de position du second dispositif de détection est un potentiomètre.

20. Dispositif selon la revendication 19, **caractérisé en ce que**
- le corps de mesure est la piste du potentiomètre en forme de revêtement résistif dans une rainure en spirale, laquelle s'étend de manière concentrique à l'axe principal dans la surface d'un disque fixé à la première pièce d'appareil et comporte un nombre de spires qui est au moins égal au nombre de tours complets possibles, et
- le curseur du potentiomètre est monté sur la seconde pièce d'appareil, de façon à glisser dans la rainure en spirale lorsque les pièces d'appareil sont tournées l'une par rapport à l'autre.

21. Dispositif selon une des revendications précédentes, **caractérisé en ce que** la seconde pièce d'appareil est fixe et la première pièce d'appareil est tournante par rapport à la seconde pièce d'appareil.

22. Dispositif selon la revendication 19, **caractérisé en ce que** la pièce d'appareil tournante est l'arbre de volant de direction d'un véhicule et **en ce que** la seconde pièce d'appareil est le moyen de fixation de l'arbre de volant de direction.
